Europäisches Patentamt

European Patent Office

Office européen des brevets

(11) Publication number: **0 251 643**
**A2**

## EUROPEAN PATENT APPLICATION

(21) Application number: **87305557.8**

(22) Date of filing: **23.06.87**

(51) Int. Cl.⁴: **B41J 5/10 , A47C 7/72**

(30) Priority: **25.06.86 AU 6567/86**

(43) Date of publication of application:
**07.01.88 Bulletin 88/01**

(84) Designated Contracting States:
**AT BE CH DE ES FR GB GR IT LI LU NL SE**

(71) Applicant: **CUFFE, Michael**
**18 Marlborough Place**
**St Ives New South Wales(AU)**

(72) Inventor: **CUFFE, Michael**
**18 Marlborough Place**
**St Ives New South Wales(AU)**

(74) Representative: **Fitzpatrick, Alan James et al**
**Fitzpatricks 4 West Regent Street**
**Glasgow G2 1RS Scotland(GB)**

(54) **Arm-rest keyboard.**

(57) An ergonomically designed keyboard having at least one keypad and armrest combination (2, 3) adapted to the arm of a chair (1). The armrest is positioned rearwardly of the keyboard, the keyboard having a plurality of keys arranged in rows and columns according to the natural lay of the curvature of the periphery of the fingers when in a relaxed position. The keypad and armrest combination (2, 3) is preferably inclined at an outwardly facing inclination relative to the chair arm, the armrest being slidably movable, to support the ulna side of the forearm.

FIG. 1

EP 0 251 643 A2

## ARM-REST KEYBOARD

The present invention relates to keyboards and more particularly to an ergonomically designed keyboard adapted to be mounted to the arms of a chair.

With widespread growth of computer systems, word processing and data processing facilities, there has been a corresponding increase in the use of keyboards and other computer associated equipment. Much design has been aimed at producing workstations which provide a comfortable environment for the operator, to thus reduce the incidence of fatigue and problems such a Repetative Strain Injury (RSI). In the past, most of this design has concentrated on providing adjustability of all components of the work station, such that the operator can move each component to a position of maximum comfort. For example, much ergonimic design has revolved around the provision of adjustable desk systems whereby the elevation and angles of the various work surfaces may be adjusted to suit the particular operator. More recently, the manufacturers of such computer associate equipment have been allowing for user adjustability of the actual equipment, for instance, rotating VDU screens, and adjustable keyboard elevations. Because of the nature of the design of conventional computer associated equipment, unreasonable compromises are imposed on the designer to provide relief to the above mentioned problems.

The keyboard, in particular, is derived from nineteenth century typewriters. In the past, these keyboards were mainly used by the female population, however, with the recent widespread introduction of personal computers, existing problems have been aggravated due to poor operating posture. The keys of a conventional keyboard are set such that each column of keys is angled to the left. Due to this conventional positioning, the left wrist automatically exhibits ulna deviation, caused by the hands being turned out at the wrists. For a person of large build, particularly males, the forearms must be turned inward across the front of the body, with the elbows in the outward position. This further aggravates ulna deviation. The typical posture of a keyboard operator requires shoulder abduction (shoulders out from side), shoulder flexion (elbows forward) ulna deviation (hands turned out at the wrists with the palms face down) and constant wrist and finger extension and flexion. These adverse positions give rise to tension in the muscles, tendons and ligaments concerned, which increases fatigue and causes problems such as Repetitive Strain Injury (RSI).

More recent studies have essentially concentrated on providing height and angle adjustability of the various components of the workstation in an attempt to minimise these problems. The operator is now generally able to adjust the chair height, adjust the footrest height, adjust the keyboard height and angle, and rotate the VDU screen. Whilst these provisions may go some way towards reducing the above-mentioned problems, often these various components are either, not adjusted at all, or not correctly adjusted. Whilst some operators may have benefited from these provisions, many operators have had difficulty changing long-established seating habits.

The present invention seeks to overcome or at least ameliorate these problems by providing a keypad and armrest combination adapted to the arm of a chair.

The present invention also seeks to provide an ergonomically designed keyboard adapted to the two arms of a chair, such that an operator may sit upright with his or her forearms positioned on the arms of the chair, and so that the fingers of the operator are ergonomically positioned above the keys of the keyboard.

Preferably, said armrests are adjustable with respect to the chair. This adjustment preferably enables height adjustment, as well as fore and aft movement relative to the seat. For preference, the keyboard would also be able to swivel about the same axis as the hand.

Also for preference, the keyboard is coupled for information transfer to a visual display unit by wireless link means. Preferably, this link means comprises an infrared light emitting diode transmitter positioned in said armrest and an opto-electronic receiver positioned in the visual display unit. Such link provides maximum flexibility in respect of the chair position in relation to the VDU and also allows the chair to communicate with a number of VDU's merely by swivelling from one to the other.

Further, preferably the armrest is mounted slidably of said chair and adapted to move forward and aft in relation to the arm of said chair. This configuration allows the fingers to move to and fro across the keypad while the forearm is supported slidably on the armrest.

For preference, the keys of said keypad are arranged in columns and rows, said rows being arranged in a curve such that the centre column of the keypad extends farthest forward of said keypad with successive columns on each side thereof extending less forward progressively towards the sides of said keypad. Said curvature is preferably arranged to match the natural lay of of the periphery of the fingers and thumb of the hand when in the relaxed position. A further preferred feature is the provision of enlarged keys placed on the appropriate side of the keypad depending on whether the left or right hand to be used to operate the keyboard.

The keys of the keypads may be designed to incorporate all the keys of a conventional keyboard of a typewriter, etc, with each keypad containing half of the keys of the conventional keyboard.

In one broad form, the present invention provides a keypad and armrest combination, adapted to an arm of a chair, wherein said armrest is positioned adjacent to and rearwardly of said keypad.

In a further form, the present invention provides an ergonomically designed keyboard comprising:

two keypads, each of said keypads comprising a plurality of keys arranged in rows and columns;

two armrests, each of said armrests being positioned adjacent to and rearwardly of each of said keyboards;

wherein; a first of said keypads has its rows of keys substantially aligned to the natural lay of the curvature of the periphery of the fingers and thumb of the right hand of an operator when said right hand is in a relaxed position, a first of said armrests being moulded to support the ulna side of the right forearm of said operator, and said first keypad and said first armrest are provided on a right arm of a chair; and, a second of said keypads has its rows of keys aligned to the natural lay of the curvature of the periphery of the fingers and thumb of the left hand of said operator when said left hand is in a relaxed position, a second of said armrest being moulded to support the ulna side of the left forearm of said operator, and said second keypad and said second armrest being provided on a left arm of said chair.

A preferred embodiment of the invention will now be described, by way of example only, with reference to the accompanying drawings in which:

Fig. 1 shows a pictorial view of the ergonomic keyboard provided on a chair, according to invention;

Fig. 2 shows an exploded view of the keypad and armrest combination as shown in Fig. 1;

Fig. 3 shows a partially cutaway perspective view of the keypad and armrest combination according to the invention;

Fig. 4 shows an end elevation view of the keypad and armrest combination shown in Fig. 3;

Fig. 5 shows the key arrangement on the keypad of Fig. 3;

Figs. 6 and 7 show a typical keyboard layout for left and right hand operation, respectively.

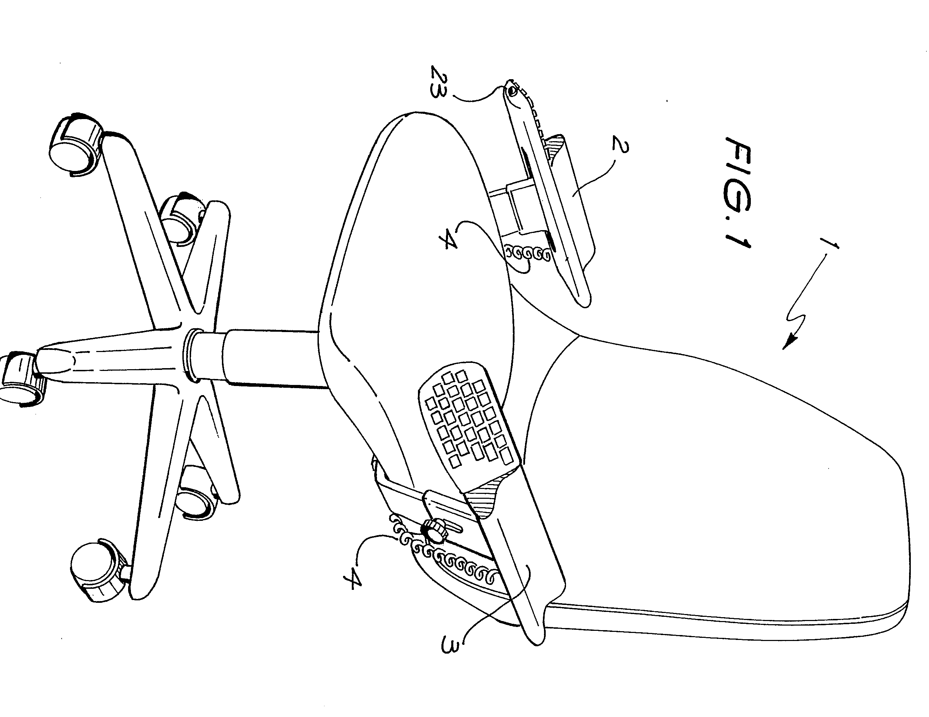

In Fig. 1 is shown a typical office chair 1, shown fitted with the keypad and armrest combinations 2 and 3, and connected by a communication cable 4. The keypad and armrest combinations 2 and 3 are fully adjustable in elevation, such that each individual operator may select a most comfortable position. As shown in the figure, each of the keypad and armrest combinations 2 and 3 are inclined at a generally outwardly facing direction relative to longitudinal axis of each chair arm.

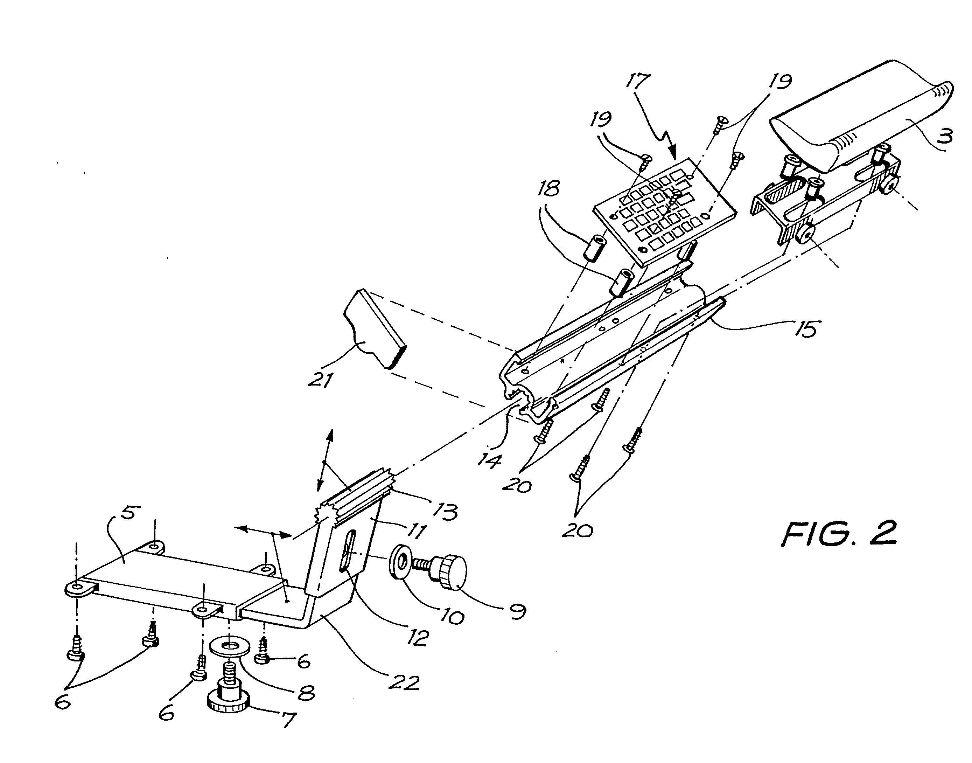

In Fig. 2 is detailed an exploded view of the keypad and armrest combination 3 and its interconnection with the arm of the chair 1. A rectangular hollow section 5 is fixed to the base of the seat with four fixing screws 6 for each armrest. Bar 22 slides in section 5 to provide width adjustment of the armrests, and may be locked with knob 7. Armrest support 11 is also a rectangular hollow section fitted to slide on armrest support bar 22. Locking knob 9 and slotted hole 12 facilitate locking and adjustment. Spline shaft 13 is rigidly attached to the armrest support 11. Armrest 15 is an extruded aluminium section with a splined cutout 14 which matches with the spline shaft 13. This allows total adjustment of the armrest. Further, by totally removing the extrusion from spline shaft 13, the armrest 15 may be rotated and slid back on to said shaft 13 at different angle thereto. This allows rotational adjustment of the armrest 15.

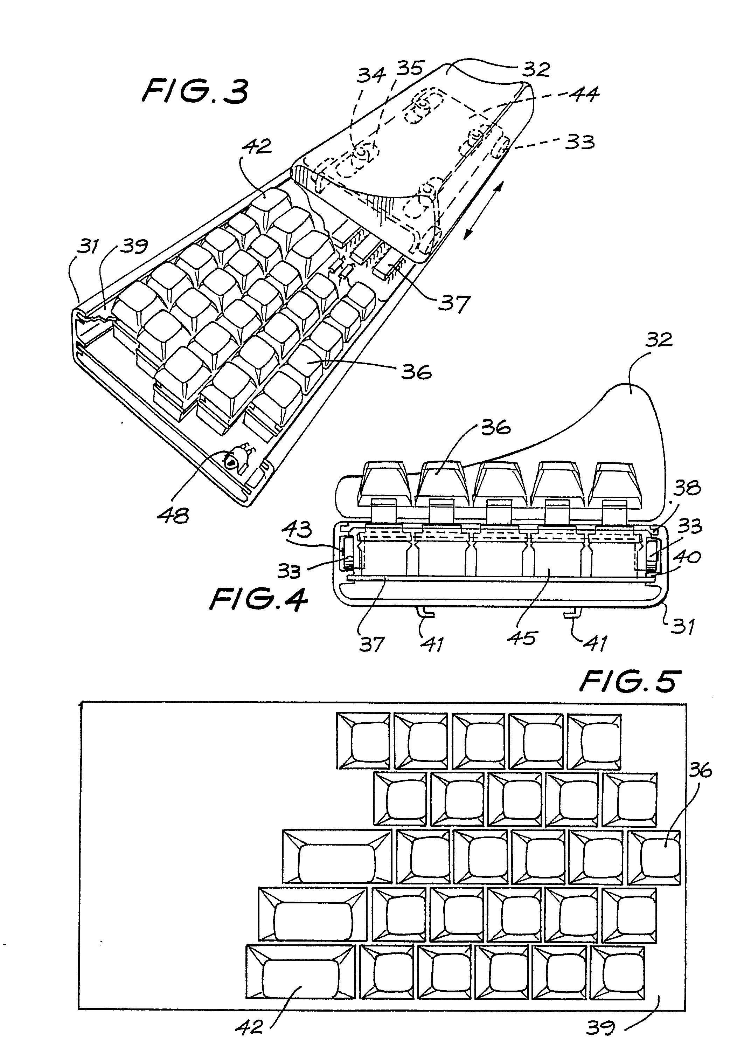

Printed circuit board 17 is fitted to extrusion 15 by screws 19 and spacers 18. Keys are mounted on this printed circuit board, matched to half the conventional Qwerty keyboard. Armrest pad 3 is also fitted to extruded section 15 using screws 20. An Infrared Light Emitting Diode 23 shown in Fig. 1, together with supporting circuitry (not shown), provides remote communication with a computer means (not shown). The ergonomically designed keyboard adapted to the two arms of the chair 1, is herein described with reference to a particular embodiment, that is, where the ergonomic keyboard and chair is constructed as one unit. It should be understood, however, that the keypad and armrest combination can also be manufactured separately from the chair, and adapted to any conventional chair. One such interconnection means is detailed hereinafter with reference to Fig. 4.

In Fig. 3, is shown an isometric view of the construction of an armrest and keypad combination. The armrest extrusion 31 in the form of a broad based U-shaped channel, is used to support the components of the keypad and armrest combination. Each side of the extrusion has, extending along the length thereof, upper and lower grooves which extend from the wall of the channel to define a running channel track 43 for guiding wheels 33 of the armrest pad 32. Upper groove 38 supports a plate 39 which may be slid thereinto. The plate 39 is used to mount the keys 36 of said keypad. The contacts 45 of said keys extend downwardly to a printed circuit board 37 which is also mounted slidably within the lower groove 40 of the extrusion.

The armrest pad 32 consists of a carriage 44 to which the pad is attached. The carriage has downwardly extending sides to which are rotatably attached a number of roller wheels 33 which run in guide track 43 and enable the armrest pad to move fore and aft in relation to the arm of the chair. The travel of the armrest pad is limited by slots 35 provided in the carriage 44. Guide members 34 slidingly engage with said slots 35 to guide said carriage and limit the forward and aft travel thereof. The armrest pad 32 is contoured to comfortably support the ulna side of the forearm of the operator, such that the arm is supported in a relaxed position, without requiring any twisting of the arm.

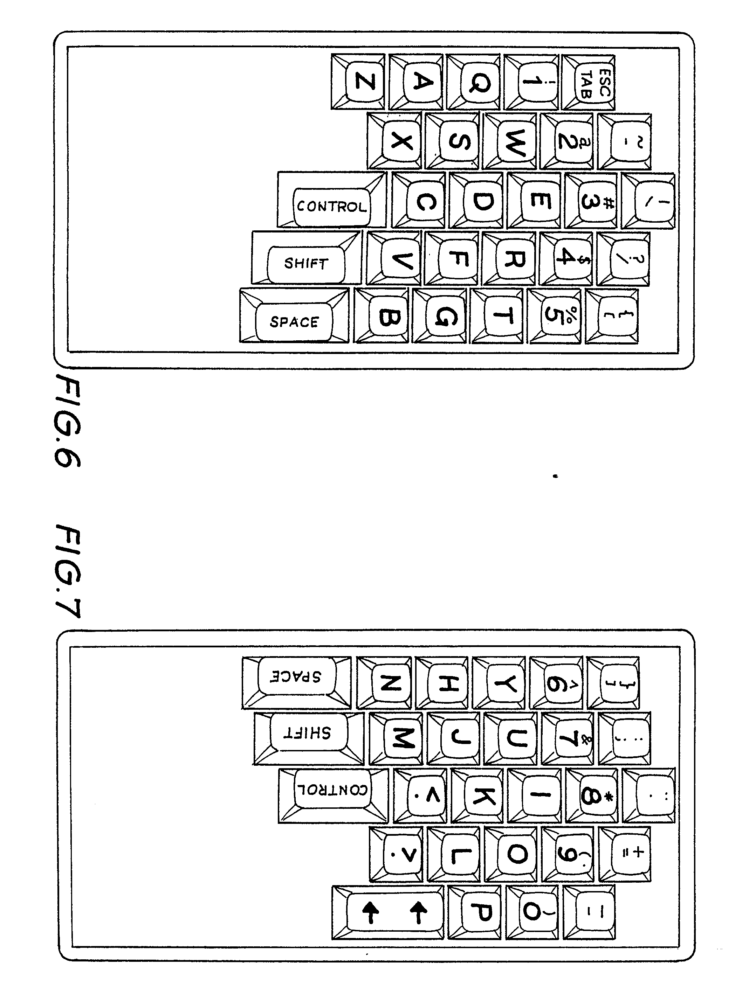

In Fig 4, is detailed an elevational view of the armrest and keypad combination of Fig. 3. Fig. 4 shows the underside of the extrusion 31 is provided with a pair of longitudinally extending slots 41 extending outwardly of said underside surface. The slots slidably engage with the arm of the chair to hold the armrest in position by suitable interconnection means (not shown). Fig. 4 also details more clearly, the interconnection of the keys 36 to the printed circuit board 37 via contacts 45. In Figs. 3, 4 and 5, are shown typical layouts of the keypads. The rows of the keys 36 are arranged to curve in approximate conformity to the natural lay of the periphery of the fingers of the hand when in a relaxed position. It is important that the fingers be in a relaxed position rather than in a flexial or extended position to ensure that muscles fatigue does not occur. Thumb keys 42 are provided on appropriate sides of each keyboard. An infrared diode 48 may be mounted on printed circuit board 37 to provide a communication link between the keyboard and a computer or like device

The keypads provided on each arm of the chair therefore provide all the keys of a conventional keyboard which is found on a typewriter or a computer keyboard, or the like.

The present invention therefore provides a keypad and armrest combination which is designed to be ergonomically efficient when utilised in place of a conventional keyboard of a typical office workstation. The keypad and armrest combination, when provided on each arm of a chair, provides a keyboard which fulfils all the functions of a conventional keyboard, whilst providing a comfortable environment for the operator, thus reducing the incidence of fatigue and problems such as Repetative Strain Injury (RSI). The present invention provides a novel keyboard which is fully adjustable for maximum comfort, minimum physical effort, and optimal operating posture.

The present invention has been described with reference to specific embodiments, however, it should be understood that numerous variations and modifications may be made without departing from the spirit and scope of the invention as herein described.

## Claims

1. A keypad and armrest combination (2, 3), adapted to an arm of a chair (1), wherein said armrest (32) is positioned adjacent to and rearwardly of said keypad (17).

2. A keypad and armrest combination (2, 3) as claimed in claim 1, wherein said keypad is comprised of a plurality of keys (36) arranged in rows and columns such that said rows are substantially aligned according to the natural lay of the curvature of the periphery of the fingers and thumb of a hand of an operator when said hand is in a substantially relaxed position.

3. A keypad and armrest combination as claimed in claims 1 or 2, wherein said keypad is disposed a generally outwardly facing inclination relative to the longitudinal axis said chair arm.

4. A keypad and armrest combination as claimed in Claim 3, wherein said armrest (32) is adapted to support substantially the ulna side of the forearm of the operator, such that the palm of the hand of the operator is provided generally parallel to said keypad.

5. A keypad and armrest combination as claimed in claim 4, wherein said armrest (32) is slidably movable relative to said keypad, such that, said ulna side of the forearm may be slidably supported by said armrest whilst said forearm is moved forward and rearward relative to said keypad.

6. A keypad and armrest combination as claimed in any one of claims 1 to 5, wherein said keypad is further provided with at least one enlarged key (42) at the rear of said columns for activation by the thumb of the operator.

7. An ergonomically designed keyboard comprising:

two keypads, each of said keypads comprising a plurality of keys (36) arranged in rows and columns;

two armrests (32), each of said armrests (32) being positioned adjacent to and rearwardly of each of said keyboards;

wherein; a first of said keypads has its rows of keys (36) substantially aligned to the natural lay of the curvature of the periphery of the fingers and thumb of the right hand of an operator when said right hand is in a relaxed position, a first of said armrests (32) being moulded to support the ulna side of the right forearm of said operator, and said first keypad and said first armrest are provided on a right arm of a chair (1); and, a second of said keypads has its rows of keys (36) aligned to the natural lay of the curvature of the periphery of the fingers and thumb of the left hand of said operator when said left hand is in a relaxed position, a second of said armrest (32) being moulded to support the ulna side of the left forearm of said operator, and said second keypad and said second armrest being provided on a left arm of said chair (1).

8. An ergonomically designed keyboard as claimed in claim 7, wherein each of said keypads is positioned at a generally outwardly facing inclination relative to said chair arm.

9. An ergonomically designed keyboard as claimed in claim 8, wherein each of said armrests (32) is adapted to support substantially the ulna sides of the forearms of the operator, such that the palms of each hand of the operator are provided generally parallel to the respective keypads.

10. An ergonomically designed keyboard as claimed in claim 9, wherein each of said armrests (32) is slidably movable relative to its respective keyboard, such that the ulna sides of the forearms of the operator may be supported on said armrests (32) and be slidably moved in the forward and rearward directions relative to said keyboard.

11. An ergonomically designed keyboard as claimed in any one of claims 7 to 10, wherein each of said keypads is provided with at least one further key (42) at the rear of said columns for activation by the thumbs of said operator.

12. An ergonomically designed keyboard as claimed in any one of claims 7 to 11, wherein the location and angular position of each of said keypads and armrests is fully adjustable relative to said chair (1), and may be selected by said operator.

FIG.1

FIG. 2

0 251 643

FIG.3

FIG.4

FIG.5

FIG.6

FIG.7